(19) Europäisches Patentamt
European Patent Office
Office européen des brevets

(11) Publication number: **0 045 949**
**A1**

(12) **EUROPEAN PATENT APPLICATION**

(21) Application number: 81106165.4

(22) Date of filing: 06.08.81

(51) Int. Cl.$^3$: C 08 K 9/04

(30) Priority: 08.08.80 US 176425

(43) Date of publication of application: 17.02.82 Bulletin 82/7

(84) Designated Contracting States: AT BE CH DE FR GB IT LI NL SE

(71) Applicant: The B.F. GOODRICH Company
Dept. 0015 WHB-6 500 South Main Street
Akron, Ohio 44318(US)

(72) Inventor: McGarry, Frederick Jerome
77 Massachusetts Avenue
Cambridge Massachusetts 02139(US)

(74) Representative: von Kreisler, Alek et al,
Deichmannhaus am Hauptbahnhof
D-5000 Köln 1(DE)

(54) **Filler particles coated with reactive liquid polymers in a matrix resin.**

(57) A composite comprising filler particles having a thin film of a reactive liquid polymer embedded in a polymeric matrix made by the method which includes the steps of mixing said reactive liquid polymer and said filler in order to provide a thin film of said reactive liquid polymer on said filler particles, mixing said coated filler particles with a polymeric matrix, and forming said composite.

EP 0 045 949 A1

# FILLER PARTICLES COATED WITH REACTIVE LIQUID POLYMERS IN A MATRIX RESIN

## BACKGROUND OF THE INVENTION

The use of unsaturated polyester resins in the molding of reinforced products enjoys broad application in the manufacture of automotive, industrial, and home products. With the advent of gasoline shortages, the automotive industry has increased its efforts to replace metal parts with fiber-reinforced composites to reduce weight and gasoline consumption. In this respect, it has been an important objective to improve physical properties of the polyester composites.

To improve crack resistance of fiber-reinforced composites, polyester resins of the type used in SMC have been modified by addition of reactive liquid polymers, such as vinyl terminated butadiene-acrylonitrile. The fracture surface energy of the modified polyester resin was thus improved by better than 9 times at a loading of 10 parts of the liquid polymer per 100 parts of about 40/60 alkyd/styrene resin and better than 3 times for a 42/58 alkyd/styrene resin. Although the toughening effect of the liquid polymers was very attractive, the resulting modified polyester resins presented mixing problems due to the incompatibility of the liquid polymers with the polyester resins.

Numerous attempts have been made to improve mechanical properties of filled polyester composites by admixing fillers, polyester resins, reactive liquid polymers, and other additives with the polyester resins, however, such attempts have been only marginally successful or totally unsuccessful due to inherent brittleness and incompatibility of the materials, or other problems.

## SUMMARY OF THE INVENTION

This invention relates to products comprising polymer coated filler particles embedded in a matrix resin

and to a method for preparing such products by initially coating the filler particles with a reactive liquid polymer and then mixing the coated filler particles with a matrix resin before forming the mixture into the desired shape.

DETAILED DESCRIPTION OF THE INVENTION

The products of this invention comprise polymer coated filler particles embedded in a thermoplastic or thermosetting matrix resin. The filler particles are coated with a thin film of a reactive liquid polymer, mixed with a matrix resin and allowed to harden. Liquid polymers suitable for this purpose include hydroxyl, vinyl, amine, carboxyl, mercaptan, isocyanate, and epoxy terminated reactive liquid polymers. To enhance adhesion or chemical bonding, various coupling agents can be applied to the filler particles separately or in the form of a blend of the coupling agent and a reactive liquid polymer, depending on the selective reactivity of functional groups of the cure agent and reactive liquid polymers, before mixing with a resin.

The reactive liquid polymer is used in a proportion calculated to deposit a thin film on the filler particles on the order of 500 to 2000 angstroms in thickness. Amount of the liquid polymer can vary from 0.1 to 50 parts, preferably 2.5 to 20 parts, whereas amount of a coupling agent can vary from 0.01 to 10 parts, preferably 0.1 to 5 parts, amounts of both ingredients are based on 100 parts by weight of filler. As to the composite product itself, amount of coated filler per 100 parts of the matrix resin can vary up to 500 parts, preferably from 20 to 200 parts.

Reference herein will be made to overcoated and additive methods of preparing composite products. The overcoating method involves the coating of filler particles with a film or a coating of a liquid polymer and then admixing the coated filler particles with a matrix resin.

In the additive method, the filler particles, liquid polymer and the matrix resin are all mixed together and then formed into a rigid structure.

As regards the filler materials suitable for use in the compositions of this invention, these may include conventional inorganic fillers such as carbonates, clays, sulfates, phosphates, silica, silicate, micromica, carborundum, asbestos, glass, sandstone, graphite, and the like, reduced to a fine powder, as well as organic materials such as polyolefins, polyvinyl chloride, carbon black and acetylene black, polyacrylate, polymethacrylates, solid polyesters, phenol-formaldehyde resins, urea-formaldehyde resins, polyformol resins, polyamid resins, used in a form ranging from very fine powder to granular size, and fibers.

Organic or inorganic bubbles may be used as fillers to reduce the weight of the compositions of this invention. Hollow glass bubbles are particularly desirable as a weight reducing filler. The glass bubbles have a nominal density less than 0.7 and preferably less than 0.5 grams per cubic centimeter. They are of small particle size of about 1 to about 500 microns, and preferably less than 150 microns.

Preferred fillers for purposes herein are the inorganic fillers, such as Atomite calcium carbonate. This particular filler has a mean particle diameter of 2.5 microns, low absorption, low binder demand due to a graded particle distribution, and good wetting characteristics. Its particle size range is up to 10 microns.

As already mentioned, a large number of reactive liquid polymers are suitable as coating materials for the fillers, including hydroxyl, vinyl, amine, carboxyl, mercaptan, isocyanate, and epoxy terminated liquid polymers. These polymers have molecular weights in the range of about 1,000 to 20,000, as measured with a Mechrolab Pressure Osmometer. In terms of bulk viscosity, these polymers are in the range of about 500 to 8,000,000 cps,

measured at 27°C with a Brookfield model LVT viscometer using spindle #7 at 0.5 to 100 rpm. In a preferred embodiment, these reactive liquid polymers have a bulk viscosity in the range of about 5,000 to 2,000,000 cps at 27°C and most preferred are liquid polymers with a bulk viscosity in the range of 10,000 to 400,000 cps at 27°C. The functional groups, which can be hydroxyl, vinyl, amine, carboxyl, mercaptan, isocyanate, and epoxy, comprise about 0.5 to 10%, preferably 1 to 5%, by weight based on the weight of the polymer.

The functionally terminated polymers have polymeric backbones comprising carbon-carbon linkages, carbon-oxygen linkages, polyether linkages, or polysulfide linkages, of which the carbon-carbon linkages are preferred. Generally, the carbon-carbon linkages comprise at least about 95% by weight of total polymeric backbone weight.

The polymers having carbon-carbon linkages contain polymerized units of a vinylidene monomers selected from (a) monoolefins containing 2 to about 8 carbon atoms such as ethylene, propylene, isobutylene, 1-butene, 1-pentene, 1-hexene, and the like; (b) dienes containing 4 to about 10 carbon atoms such as butadiene, isoprene, 2-isopropyl-1,3-butadiene, chloroprene, and the like; (c) vinyl aromatics such as styrene, α-methyl styrene, vinyl toluene, and the like; (d) vinyl nitriles such as acrylonitrile, methacrylonitrile, and the like; (e) vinyl and allyl esters such as vinyl acetate, vinyl propionate, allyl acetate, and the like; (f) vinyl and allyl ethers such as vinyl methyl ether, allyl methyl ether, and the like; (g) divinyls and diacrylates such as divinyl benzene, divinyl ether, diethylene glycol diacrylate, and the like; and (h) acrylates of the formula

$$CH_2{=}\overset{R'}{\overset{|}{C}}-\overset{O}{\overset{\|}{C}}-O-R''$$

wherein R' is hydrogen, or a lower alkyl such as methyl or ethyl groups; and R" is an alkyl radical containing 1 to

18 carbon atoms or an alkoxyalkyl, alkylthioalkyl, or cyanoalkyl radical containing 2 to about 12 carbon atoms. Examples of such acrylates are ethyl acrylate, butyl acrylate, hexyl acrylate, 2-ethylhexyl acrylate, dodecyl acrylate, octadecyl acrylate, methoxyethyl acrylate, butoxyethyl acrylate, hexylthioethyl acrylate, β-cyanoethyl acrylate, cyanooctyl acrylate, methyl methacrylate, octyl methacrylate, ethyl ethacrylate, and the like. Often two or more types of polymerized monomeric units are contained in the polymeric backbone.

Examples of liquid carboxyl-terminated polymers are carboxyl-terminated polyethylene, polybutadiene, polyisoprene, poly(butadiene-acrylonitrile), poly(butadienestyrene), poly(butadiene-acrylonitrile-acrylic acid), poly(ethyl acrylate), poly(ethyl acrylate-n-butyl acrylate), poly(n-butyl acrylate-acrylonitrile), poly(butyl acrylatestyrene), and the like. The polymers can be prepared by free radical polymerization using carboxyl-containing initiators and/or modifiers as disclosed in U.S. patent 3,285,949 and German patent 1,150,205, and polymers prepared by solution polymerization using lithium metal or organometallic compounds and post-treating the polymers to form carboxyl groups as disclosed in U.S. patents 3,135,716 and 3,431,235. Liquid carboxyl-terminated polymers such as carboxyl-terminated polybutadiene, polybutadiene-acrylonitrile, and polyacrylate were found to be excellent reactants for the preparation of the novel reactive liquid polymers.

Examples of liquid mercaptan-terminated polymers are mercaptan-terminated polybutadiene, polyisoprene, poly(butadiene-acrylonitrile), poly(ethyl acrylate), poly(ethyl acrylate-n-butyl acrylate), poly(ethyl acrylate-n-butyl acrylate-glycidyl acrylate), and the like. The polymers can be prepared by free-radical polymerization of monomers in the presence of dixanthogen disulfide and then post-reacted to form the mercaptan groups, as disclosed in U.S. patents 3,449,301 and 3,580,830 and British patent

859,470. Also included herein are mercaptan-terminated polyethers as disclosed in Journal of Polymer Science, Vol. 12 (1968), page 107; and mercaptan-terminated polyalkylene sulfides.

Examples of liquid hydroxyl-terminated polymers which can contain sulfide linkages near the terminal portions of the polymeric molecule are hydroxyl-terminated polyethylene, polybutadiene, polyisoprene, poly(butadiene-acrylonitrile), poly(acrylates), and the like. The polymers can be prepared by post-reacting carboxyl-terminated polymers, as disclosed in U.S. patents 3,551,471 and 3,551,472; by free-radical polymerization of monomers using hydroxyl-containing initiators, as disclosed in U.S. patent 2,844,632; and by solution polymerization using lithium or organometallic catalysts and post-reacting the product to form the hydroxyl groups, as disclosed in U.S. patents 3,135,716 and 3,431,235.

Examples of liquid amine-terminated polymers are the amine-terminated poly(2-methyl ethoxy) polymers and the glycol polyamines disclosed in U.S. patent 3,306,809. U.S. patent 4,133,957 describes preparation of amine-terminated liquid polymers by reacting carboxyl-terminated, ester-terminated or acid chloride-terminated liquid polymers having a carbon-carbon backbone with an aliphatic, alicyclic, heterocyclic, or aromatic amine.

Examples of liquid epoxy-terminated polymers are glycidyl ethers of polyhydric alcohols such as glycerol, pentaerithritol, polyvinyl alcohol, 1,3,5-trihydroxybenzene, and the like; the glycidyl ethers of polyhydric phenols, such as bisphenol A resins, and of phenol-formaldehyde products, such as the Novolac resins; and other epoxies as disclosed in U.S. patent 3,310,601.

Liquid vinylidene-terminated polymers can be prepared by reacting a liquid polymer having a terminal functional group selected from carboxyl, hydroxyl, mercaptan, amine, and epoxy with a compound containing both an epoxy group and a vinylidene group. This reaction can be

catalyzed with a base. U.S. patent 4,129,713 describes certain of the liquid vinylidene-terminated polymers and preparation thereof.

The isocyanate terminated liquid polymers can be prepared by reacting a diisocyanate, a dihydroxy terminated polyoxypropylene, and a polypropylene ether triol in presence of a miscible and compatible plasticizer. These liquid polymers have viscosity of 25,000 to 100,000 cps at 27°C and molecular weight of 15,000 to 25,000. Another manner of preparing such liquid polymers comprises the reaction of an organic polyisocyanate with a diamine and an active hydrogen-containing material selected from polyester polyols and low molecular weight monomeric diols. U.S. patents 3,912,790 and 3,933,725 disclose suitable isocyanate terminated reactive liquid polymers and their preparation.

In order to increase the bonding between a filler particle and the film of a reactive liquid polymer thereon, a coupling agent can be utilized to this advantage. A coupling agent is a chemical additive which provides a molecular bridge between the interface of a filler particle and the reactive liquid polymer film thereon. Suitable coupling agents include titanates and silanes. A coupling agent is applied onto the surface of filler particles by mixing it with a reactive liquid polymer and then mixing the resulting material with the particulate filler in an amount calculated to provide a coating of desired thickness. Alternately, a coupling agent can be applied onto the filler particles followed by mixing with a reactive liquid polymer.

Silane coupling agents can be represented by the general formula $(RO)_3$ Si RX where X is a functional group such as amine, mercaptan, epoxy, haloalkyl, vinyl, acrylate or methacrylate, etc. These groups are attached to the silicon atom through a stable linkage R, usually a $-(CH_2)_3-$ group. At the other end are hydrolyzable alkoxy or acetoxy groups, which hydrolyze to reactive

$-Si(OH)_3$ functionality. Specific examples of silane coupling agents include p-tolyltrichlorosilane, p-bromomethylphenyltrichlorosilane, methacrylate ester silane, a cationic vinylbenzyl-functional silane, triacetoxyvinylsilane, triacetoxychlorodimethylsilane, and the like.

A variety of titanate coupling agents are also available, including monoalkoxy, coordinate, and chelate. In general, monoalkoxy types are recommended for thermoplastics and organic-based polymers and wet fillers; and coordinates, for emulsification and transesterification inhibition with the hydroxyl groups or ester backbone of polymer systems such as epoxies, urethanes, polyesters and alkyds. Specific examples are isopropyl, triisostearoyl titanate for polyolefins and polyesters; isopropyl, tri-(dioctylphosphate)titanate for epoxies and PVC; isopropyl, triricinoyl titanate for polyesters and polyurethanes; isopropyl, tri(methoxyphenyl)titanate for epoxies and sulfur cured systems; as well as isopropyl, tri(dioctylpyrophosphate)titanate; tetraoctyloxytitanium di(dilaurylphosphite); titanium diisostearate, oxyacetate; titanium di(cumylphenolate)oxyacetate; diacryl, ethylene titanate; isopropyl, tri(N-ethylamino-ethylaminotitanate); and diisostearoyl, ethylene titanate;

The use of a coupling agent should be scrutinized since improved results are not necessarily obtained therewith. Certain composites prepared with overcoated filler particles containing a coupling agent between the filler particles and the liquid rubber coating gave lower fracture surface work values than same composites without a coupling agent on the filler particles. On the basis of experimental studies, it can be concluded that at low concentrations of certain low molecular weight reactive liquid polymers as coatings, addition of a coupling agent increases the value of fracture surface work although it does not appear to have any significant effect if a high molecular weight liquid polymer is used in low concentration.

The matrix resin can be thermosetting or thermoplastic. Phenolic resins such as phenol formaldehyde and urea formaldehyde, unsaturated polyesters, epoxies, and furans are examples of thermosetting materials in which, on curing, a heat-stable crosslinked polymer network extends throughout the finished article which permanently loses the ability to flow on heating.

A large number of thermoplastic matrix resins can be used in the manner described herein. These include polystyrene; copolymers of styrene and butadiene; copolymers of styrene and linear alkyd resins; polymers of styrene derivatives such as alkyl and alkoxy styrenes; polyester resins; acrylic resins such as polymethyl methacrylate, polymers of acrylic esters such as polymethyl acrylate, and other acrylic polymers such as polyacrylonitrile, polyacrylic and polymethacrylic acids; polyvinyl acetate and derived polymers such as polyvinyl alcohol and polyvinyl acetals; polymers and copolymers of vinyl chloride such as polyvinyl chloride, copolymers of vinyl chloride and vinyl acetate, copolymers of vinyl chloride and vinylidene chloride, and vinylidene chloride polymers and copolymers; polycarbonates; fluorine-containing polymers such as polytetrafluoroethylene, polyvinyl fluoride, and polyvinylidene fluoride; ethylene polymers and copolymers such as the various polyethylenes, and copolymers of ethylene with vinyl or vinylidene chloride, methyl methacrylate, acrylonitrile, tetrafluoroethylene, vinyl acetate, and alpha olefins such as propylene or butene-1; nylon resins; polyethylene terephthalate; and linear alkyd polyesters.

Preferred matrix resins useful in this invention are well known in the art and include those unsaturated polyester resins derived by condensation of unsaturated dibasic acids or anhydrides containing 4 to 9 carbon atoms with polyols including dihydroxy and trihydroxy compounds containing 2 to 12 carbon atoms. The polyesters may include in the polymeric chain varying proportions of

other saturated or aromatic dibasic acids and anhydrides which are not subject to cross-linking. The particular noncross-linking moieties and their proportions will depend upon the desired properties of the final product. Maleic, chloromaleic and fumaric acid may be mentioned as exemplary of unsaturated dibasic acids. Aromatic and saturated acids and anhydrides which are exemplary of noncross-linking moieties with the copolymer include: phthalic anhydride, tetrachlorophthalic acid, adipic acid, sebacic acid, succinic acid, and the like.

Any of a variety of well known polyols including di- and tri-hydroxy compounds containing 4 to 9 carbon atoms, preferably 4 to 6 carbon atoms, can be used for condensation with the diacids to produce polyesters suitable for use in this invention. Preferred compounds, which are mentioned by way of example, of the large number of applicable compounds include: ethylene glycol, diethylene glycol, propylene glycol, polypropylene glycol, glycerol, 1,2-, 1,3- and 1,4-butadienols, trimethylol propane, and the like. The method by which the unsaturated polyester resins are made is well known and is not critical to this invention.

As used in this invention, the polyester resin is dissolved in a solvent comprising at least one polymerizable monomer which is copolymerizable with the dissolved polyester. The polymerizable monomer not only acts as a solvent but also copolymerizes with the unsaturated groups along the polyester chain. Polymerizable monomers which can be used in this invention include polymerizable vinylidene compounds having at least one terminal $CH_2=C<$ group and containing 2 to 12 carbon atoms, preferably 3 to 10 carbon atoms. A wide variety of these compounds are known including both aliphatic and aromatic unsaturated hydrocarbons and hydrocarbon derivatives, such as esters, acids and nitriles. Examples of suitable polymerizable monomers are styrene, methyl styrene, acrylonitrile, methyl acrylate, methyl methacrylate, vinyl acetate, allyl

esters of phthalic, adipic, maleic, malonic, and cyanuric acids. Styrene and methyl styrene are particularly useful polymerizable monomers. Commercial unsaturated polyester resins are normally sold as a liquid solution with the unsaturated polyester resin dissolved in the polymerizable monomer.

Pursuant to this inventon, preparation of a composite involves coating of the filler particles with a coupling agent and/or reactive liquid polymer, mixing the pretreated filler particles with a matrix resin, and finally, forming the mixture into a structured composite. Other desired additives and reinforcing materials can be incorporated into the composite by premixing them with the pretreated filler and the liquid resin matrix. In instances where the use of a coupling agent is desired, the coupling agent can be applied individually or as a blend thereof with a reactive liquid polymer onto the filler particles, as already described.

## EXAMPLES

The filler used herein was Atomite calcium carbonate with a mean particle size of 2.5 microns and particle size range of up to 10 microns. Its composition was about 98% calcium carbonate. Mixing was done in a Henschel high intensity laboratory mixer by initially adding thereto 2.204 pounds of the filler, Vanax CPA and methyl nicklate. Vanax CPA is dimethyl ammonium hydrogen isophthalic accelerator for cross-linking the hydroxyl terminated polyepichlorohydrin reactive liquid polymer and methyl nicklate is nickel dimethyl dithiocarbamate, an antioxidant for the liquid polymer. Thiate-E, which is trimethylthiourea, can be used alone or in conjunction with Vanax CPA as accelerator for the hydroxyl terminated polyepichlorohydrin reactive liquid polymer overcoat. Shortly after adding filler, accelerator and antioxidant to the mixer, a slightly warm solution of a coupling agent and reactive liquid polymer was added through a side port with mixing in progress. In some instances, the coupling

agent was omitted. Mixing was thereafter continued for about 5 minutes following which, pretreated filler was removed from the mixer and the liquid film or coating thereon was allowed to cure by cross-linking. Amount of the reactive liquid polymer added was calculated to provide a film of 1000 or 2500 angstroms on the surface of filler particles. The coupling agent used in pretreating the filler was KR-44 titanate coupling agent, i.e., isopropyl, tri(N-ethylamino-ethylaminotitanate, which has very active primary amine groups.

Three different reactive liquid polymers were tested: HTEX1, HTEX2 and VTBNX, i.e., two varieties of hydroxyl terminated epichlorohydrin reactive liquid polymers and one vinyl-terminated butadiene acrylonitrile reactive liquid polymer. Properties of these liquid polymers are summarized in Table I, below:

TABLE I

| | HTEX1 | HTEX2 | VTBNX |
|---|---|---|---|
| Specific Gravity at 77°F | 1.347 | 1.347 | 0.973 |
| Viscosity at 27°C, cps | 250,000 | 300,000 | 280,000 |
| Molecular Weight, $\bar{M}n$ | 1500 | 3000 | 1200 |
| Molecular Weight, Mw | 6000 | 20,000 | - |
| Hydroxyl Content, % | 31.6 | 18.0 | - |
| Acrylic-Vinyl Content, % | - | - | 3.8 |

Mixing of pretreated filler with a matrix resin was carried out in a 600-ml flask with the aid of Air Drive Series 20 Lightning stirrer/mixer. In all of the samples, methyl ethyl ketone peroxide at 1 phr, as a low temperature cross-linking agent for an unsaturated polyester system containing styrene monomer, and cobalt naphthanate at 0.25 phr, as an accelerator for low temperature cross-linking of unsaturated polyester system containing styrene, were added to the resin in the flask at the start of the mixing. Amounts of the additives are based on the weight of the matrix resin. Methyl ethyl ketone peroxide was used as a 60% solution in dimethyl

phthalate and cobalt naphthanate was used as a 6% solution in styrene monomer. Mixing was continued until a uniform dispersion of the additives was obtained in the matrix resin, at which time, pretreated filler was added and mixed with the resin. The polyester resin used was Selectron 50271, a high exotherm isophthalic unsaturated resin containing 30 to 35% styrene monomer. This resin is specifically designed for fast curing and high strength SMC. Its properties are given in Table II, below:

TABLE II

| | |
|---|---|
| Specific Gravity | 1.11-1.13 |
| Viscosity, cps | 1,600-1,900 |
| Acid Value | 22-32 |
| Water Content, % | 0.15 max. |

When Thiate-E accelerator for cross-linking was employed, it was hand mixed with the pretreated filler prior to addition of the matrix resin. Structural formula of Thiate-E is as follows:

$NH-CS-NCH_3$
$\;\;|\qquad\;\;\;|$
$CH_3\quad CH_3$

Samples were cast in aluminum molds kept at 35°C with curing proceeding at 35°C. The temperature was raised to 60°C for 1 hour and then to 120°C for post-curing for 2 hours. After curing, the samples were cut into two specimens approximately 1/4" thick by 1-1/4" width by 9-13/16" long. Both edges of the specimen were milled to attain a width of exactly 1.2". Two 1/8" diameter holes were drilled at one end of the specimen, each 0.13" from the edge and 0.14" from the end. Both sides of the specimen were then slotted in the center along the entire length. The slot depth was approximately 1/12" and the width was 0.006". After slotting, a one-inch long notch was machined into the end of the specimen containing the two 1/8" drill holes.

Testing of the specimens was carried out in an Instron machine, to which the sample was attached by inserting pins through the 1/8" drilled holes. The free end was supported to keep the specimen in a horizontal position. Also, special care was taken so the sample would not be subjected to any bending arising from defective alignment of the pins.

A crosshead speed of .005 inches/minute and a chart speed of 2 inches/minute were used, with the chart calibrated at one-inch equal to one pound of force. Generally, the crack proceeded along a plane in the center of the specimen, although in some cases it deviated slightly and then returned to the plane. Also, the crack propagated in a discontinuous stick-slip mode; sudden jumps of the crack were followed by pauses as the load on the specimen gradually built up again.

The crack length was measured in each test, after it had propagated a few inches. Then the sample was retested, letting the crack propagate further. The measurement of the crack length was made by backlighting the specimen and using a scale; subsequently the specimens were cut to determine the accuracy of the crack length measured. In most cases they differed by an average of 5%, which was acceptable. The time versus force graph obtained for each specimen was used to determine work in inch-pounds.

The fracture surface energy for each specimen was then calculated as follows:

$$\frac{\text{work of fracture}}{2\ wl} \qquad (2)$$

where w = crack width
l = crack length.

Fracture surface work values for the specimens whose sample composition is given in Tables III to V, were obtained from the Double Cantilever Beam Test. Two tests were carried out on each specimen, allowing the crack to

propagate each time to a certain recorded length. Two fracture surface work values $\alpha_1$ and $\alpha_2$ were calculated and then an average value was determined using the following expression:

$$(3) \qquad \alpha_{av.} = \frac{W_t}{2\, l_t w}$$

where $W_t$ is the total work involved in propagating the crack over the total length $l_t$. The average value of fracture surface energy, or fracture toughness is used herein which is an indication of resistance to initiation and propagation of a crack.

Composition of the test samples is given in Table III, below, as well as comparison data for fracture toughness. To facilitate understanding of the test results, each sample is graphically illustrated by symbols wherein:

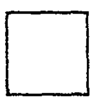 a square represents polyester matrix resin

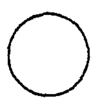 a circle represents calcium carbonate filler particle

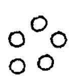 light beads represent reactive liquid polymer

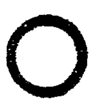 solid band around the filler particle is a coupling agent adhering to the filler particle

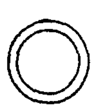 an open band around the filler particle is a reactive liquid polymer film adhering to the filler particle

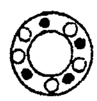 blend of coupling agent and reactive liquid polymer adhering to the filler particle

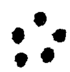 solid beads represent coupling agent

TABLE III

| Sample No. | A | B | C | D | E | F | G | H | I |
|---|---|---|---|---|---|---|---|---|---|
| | 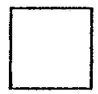 | 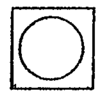 | 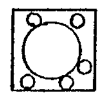 | 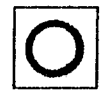 | 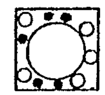 | 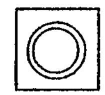 | 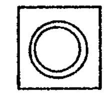 | 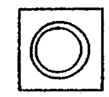 | 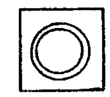 |
| Content (phr): | | | | | | | | | |
| Polyester Matrix Resin | 100 | 100 | 100 | 100 | 100 | 100 | 100 | 100 | 100 |
| Methyl Ethyl Ketone | 1 | 1 | 1 | 1 | 1 | 1 | 1 | 1 | 1 |
| Co. Naph. Accelerator | 0.25 | 0.25 | 0.25 | 0.25 | 0.25 | 0.25 | 0.25 | 0.25 | 0.25 |
| $CaCO_3$ Filler | - | 100 | 100 | 100 | 100 | 100 | 100 | 100 | 100 |
| Titanate Couplin Agent | - | - | - | - | 0.50 | 0.46 | - | - | - |
| HTE (X1) RLP | - | - | 15.50 | - | 15.50 | 6.78 | - | - | - |
| HTE (X2) RLP | - | - | - | - | - | - | 6.78 | - | - |
| VTBNX (X23) RLP | - | - | - | - | - | - | - | 8.55 | 27.7 |
| Vanax CPA Accelerator | - | - | - | - | 0.53 | 0.23 | 0.23 | - | - |
| Methyl Nicklate AO | - | - | - | - | 0.15 | 0.06 | 0.06 | - | - |
| Thiate-E Accelerator | - | - | - | - | - | - | - | - | - |
| Fracture Toughness ($in-lb/in^2$) | 0.197 | 0.331 | 0.275 | 0.268 | 0.179 | 0.390 | 0.373 | 0.928 | 1.102 |

Analysis of the data presented in Table III, above, indicates that pretreatment or overcoating the filler with a reactive liquid polymer provides significant improvement in fracture toughness. Sample A, which was a cured polyester matrix resin above, shows fracture toughness of 0.197 whereas addition of 100 parts filler per 100 parts of the matrix resin, i.e., sample B, increased this value to 0.331. In sample c, the matrix resin was blended with 15.50 parts of a lower molecular weight HTEX1 reactive liquid polymer before the blend of the two materials was mixed with the filler. Sample C showed a decreased fracture toughness of 0.275. Similar result was obtained for sample D where the filler was overcoated with a titanate coupling agent before blending with the matrix resin. Sample E showed unexpectedly poor fracture toughness which was even lower than the cured matrix resin of sample A. In sample E, the matrix resin, the reactive liquid polymer and the filler were blended together and then formed into a cured test sample. A significant improvement in fracture toughness was realized in the case of samples F, G, H and I. All of these samples were prepared by initially overcoating the filler with a reactive liquid polymer and then admixing the overcoated filler with a matrix resin before forming a cured composite test sample. Respective fracture toughness of samples F and G prepared with hydroxyl-terminated epichlorohydrin reactive liquid polymers are 0.390 and 0.373 whereas for samples H and I, prepared with a vinyl terminated reactive liquid polymer, the respective values are 0.928 and 1.102. The fracture toughness values for samples H and I are about triple those for sample B, prepared by mixing the filler with the matrix resin.

In Table IV, below, comparison data is provided for samples F and G versus samples J, K, L and M. Samples F and G were prepared by initially overcoating the filler with an HTE reactive liquid polymer and then mixing the overcoated filler with the matrix resin whereas samples J

to M were prepared by overcoating the filler with a blend of an HTE reactive liquid polymer and a titanate coupling agent and then mixing the overcoated filler with the matrix resin.

TABLE IV

| Sample No. | F | G | J | K | L | M |
|---|---|---|---|---|---|---|
| | 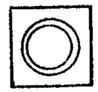 | 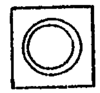 | 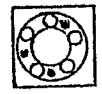 | | | |
| Content (phr): | | | | | | |
| Polyester Matrix Resin | 100 | 100 | 100 | 100 | 100 | 100 |
| Methyl Ethyl Ketone | 1 | 1 | 1 | 1 | 1 | 1 |
| Co. Naph. Accelerator | 0.25 | 0.25 | 0.25 | 0.25 | 0.25 | 0.25 |
| $CaCO_3$ Filler | 100 | 100 | 100 | 100 | 100 | 100 |
| Titanate Couplin Agent | - | - | 0.56 | 0.46 | 0.49 | 0.46 |
| HTE (X1) RLP | 6.78 | - | 6.74 | 15.29 | - | - |
| HTE (X2) RLP | - | 6.78 | - | - | 7.79 | 15.29 |
| VTBNX (X23) RLP | - | - | - | - | - | - |
| Vanax CPA Accelerator | 0.23 | 0.23 | 0.23 | 0.53 | 0.20 | 0.53 |
| Methyl Nicklate AO | 0.06 | 0.06 | 0.06 | 0.15 | 0.06 | 0.15 |
| Thiate-E Accelerator | - | - | - | - | - | - |
| Fracture Toughness ($in-lb/in^2$) | 0.390 | 0.373 | 0.479 | 0.515 | 0.318 | 0.584 |

As is apparent from Table IV, above, fracture toughness values for samples F and G are nearly the same, 0.390 versus 0.373, indicating lack of significant difference between lower and higher molecular weight HTE reactive liquid polymers. There is a considerable variation in fracture toughness values for samples J to M. Addition of the coupling agent generally results in improved fracture toughness (note samples J, K and M), except with higher molecular weight HTEX2 reactive liquid polymer when used at low concentration (note sample L). Table IV, above, also demonstrates that higher fracture toughness values are obtained at higher concentration of the reactive liquid polymers.

The effect of accelerator Thiate-E for cross-linking of the reactive liquid polymers on fracture toughness is shown in Table V, below, where samples J, K, L and M are compared to samples N, O, P and Q. Samples J to Q were prepared by blending the titanate coupling agent with an HTE reactive liquid polymer, overcoating the filler with the blend of the coupling agent and the liquid polymer, and then mixing the overcoated filler with the matrix resin. The difference between samples J to M and N to Q was Thiate-E, the accelerator: samples J to M did not contain any whereas samples N to Q did. Wherever used, Thiate-E was hand mixed with the overcoated filler prior to addition of the matrix resin.

TABLE V

| Sample No. | J | K | L | M | N | O | P | Q |
|---|---|---|---|---|---|---|---|---|
| | 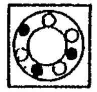 | | | | | | | |
| Content (phr): | | | | | | | | |
| Polyester Matrix Resin | 100 | 100 | 100 | 100 | 100 | 100 | 100 | 100 |
| Methyl Ethyl Ketone | 1 | 1 | 1 | 1 | 1 | 1 | 1 | 1 |
| Co. Naph. Accelerator | 0.25 | 0.25 | 0.25 | 0.25 | 0.25 | 0.25 | 0.25 | 0.25 |
| $CaCo_3$ Filler | 100 | 100 | 100 | 100 | 100 | 100 | 100 | 100 |
| Titanate Couplin Agent | 0.56 | 0.46 | 0.49 | 0.46 | 0.56 | 0.46 | 0.49 | 0.46 |
| HTE (X1) RLP | 6.74 | 15.29 | - | - | 6.74 | 15.29 | - | - |
| HTE (X2) RLP | - | - | 7.79 | 15.29 | - | - | 7.79 | 15.29 |
| VTBNX (X23) RLP | - | - | - | - | - | - | - | - |
| Vanax CPA Accelerator | 0.23 | 0.53 | 0.20 | 0.53 | 0.23 | 0.53 | 0.20 | 0.53 |
| Methyl Nicklate AO | 0.06 | 0.15 | 0.06 | 0.15 | 0.06 | 0.15 | 0.06 | 0.15 |
| Thiate-E Accelerator | - | - | - | - | 0.027 | 0.063 | 0.013 | 0.031 |
| Fracture Toughness ($in/lb/in^2$) | 0.479 | 0.515 | 0.381 | 0.584 | 0.426 | 0.710 | 0.502 | 0.603 |

Generally speaking, the use of Thiate-E accelerator for cross-linking the HTE reactive liquid polymers provides further improvement in fracture toughness except for lower molecular weight HTEX1 liquid polymer at low concentration. This is apparent from comparison of all the samples except samples J and N. Sample J, prepared with lower molecular weight HTEX1 liquid polymer at low concentration and without the accelerator, had fracture toughness of 0.479 whereas Sample N, prepared with the same HTEX1 liquid polymer with the accelerator, had fracture toughness of 0.426. As can be verified from Table V, samples J to Q indicate that higher fracture toughness is obtained at higher concentrations of the reactive liquid polymers.

CLAIMS

1. Composition of matter comprising filler particles having a thin film of a reactive liquid polymer embedded in a polymeric matrix.

2. Composition of Claim 1 wherein said filler is selected from inorganic fillers; said reactive liquid polymer is selected from hydroxyl, vinyl, amine, carboxyl, mercaptan, isocyanate, and epoxy terminated reactive liquid polymers and mixtures thereof; and said polymeric matrix is selected from thermosetting or thermoplastic, and mixtures of these materials.

3. Composition of Claim 2 wherein amount of said reactive liquid polymer can vary from 2.5 to 20 parts per 100 parts of said filler; amount of said coated filler can vary from 20 to 200 parts per 100 parts of said matrix material; said reactive liquid polymer is selected from hydroxyl terminated reactive epichlorohydrin liquid polymers, vinyl terminated butadiene-acrylonitrile reactive liquid polymers, and mixtures of such polymers; said matrix resin is selected from polyester resins; and wherein amount of said reactive liquid polymer on said filler particles is calculated to provide a film of about 500 to 2000 angstroms in thickness.

4. Composition of Claim 3 including a coupling agent adhering to said filler particles and bonding said reactive liquid polymer to said filler particles, said coupling agent is selected from silanes, titanates and mixtures thereof and amount thereof being 0.1 to 5 parts per 100 parts of said filler.

5. Method of producing a composite comprising filler particles coated with a reactive liquid polymer embedded in a polymeric matrix, said method comprising mixing said reactive liquid polymer and said filler in order to provide a thin film of said reactive liquid polymer on said filler particles, mixing said coated

filler particles with a polymeric matrix, and forming said composite.

6. Method of Claim 5 wherein said filler is selected from inorganic fillers; said reactive liquid polymer is selected from hydroxyl, vinyl, amine, carboxyl, mercaptan, isocyanate, and epoxy terminated reactive liquid polymers and mixtures thereof; and said polymeric matrix is selected from thermosetting or thermoplastic, and mixtures of these materials.

7. Method of Claim 6 wherein amount of said reactive liquid polymer can vary from 2.5 to 20 parts per 100 parts of said filler; amount of said coated filler can vary from 20 to 200 parts per 100 parts of said matrix material; said reactive liquid polymer is selected from hydroxyl terminated reactive epichlorohydrin liquid polymers, vinyl terminated butadiene-acrylonitrile reactive liquid polymers, and mixtures of such polymers; and said matrix resin is selected from polyester resins.

8. Method of Claim 7 wherein amount of said reactive liquid polymer on said filler particles is calculated to provide a film of about 500 to 2000 angstroms in thickness.

9. Method of Claim 8 wherein an effective amount of a coupling agent is admixed to bond said filler particles to said reactive liquid polymer, said coupling agent is selected from silane and titanate coupling agents and is used in an amount of 0.1 to 5 parts per 100 parts of said filler.

10. Method of Claim 9 including the step of admixing an effective amount of an accelerator for cross-linking said reactive liquid polymer, said accelerator is mixed with said coated filler particles before mixing thereof with said polymeric matrix.

0045949

European Patent Office

# EUROPEAN SEARCH REPORT

Application number
EP 81 10 6155

## DOCUMENTS CONSIDERED TO BE RELEVANT

| Category | Citation of document with indication, where appropriate, of relevant passages | Relevant to claim |
|---|---|---|
| | DE - A - 1 792 075 (L. BRUGGEMANN)<br>* Claims 1-4, examples 1-3; page 3,lines 1,2 * | 1-3,5, 6,7,8, 10 |
| | -- | |
| | AU - A - 410 006 (I.C.I.)<br>* Claims 1-41 * | 1-10 |
| | -- | |
| | GB - A - 1 380 361 (COMMONWEALTH SCIENTIFIC AND INDUSTRIAL RESEARCH ORGANIZATION)<br>* Claims 1-26 * | 1-3,5, 6,7,8, 10 |
| | -- | |
| | GB - A - 1 255 310 (THE CHAMPION PAPER COMP. LTD.)<br>* Claims 1-10 * | 1-3,5, 6,7,8, 10 |
| | -- | |
| | GB - A - 1 357 319 (LAPORTE INDUSTRIES)<br>* Claims 1-39 * | 1-3,5, 6,7,8, 10 |
| | ----- | |

CLASSIFICATION OF THE APPLICATION (Int. Cl.³)

C 08 K 9/04

TECHNICAL FIELDS SEARCHED (Int. Cl.³)

C 08 K 9/04

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 17-11-1981 | DECOCKER |

EPO Form 1503.1 06.78